(19) **Europäisches Patentamt / European Patent Office / Office européen des brevets**

(11) **EP 3 902 662 B1**

(12) **FASCICULE DE BREVET EUROPEEN**

(45) Date de publication et mention de la délivrance du brevet:
**22.02.2023 Bulletin 2023/08**

(21) Numéro de dépôt: **19850770.9**

(22) Date de dépôt: **27.12.2019**

(51) Classification Internationale des Brevets (IPC):
**B29C 49/42** (2006.01)  **B29L 31/00** (2006.01)
**B29C 49/06** (2006.01)  **B29C 49/64** (2006.01)
**B65B 3/00** (2006.01)  **B65B 7/00** (2006.01)
**B65G 47/00** (2006.01)  **B67B 1/00** (2006.01)
**B67C 7/00** (2006.01)  **B67C 3/22** (2006.01)

(52) Classification Coopérative des Brevets (CPC):
**B67C 7/002; B29C 49/42069;** B29C 49/06;
B29C 49/42073; B29C 49/6418; B29L 2031/7158;
B65G 17/326; B65G 47/5113; B65G 47/842;
B67C 2003/227

(86) Numéro de dépôt international:
**PCT/FR2019/053310**

(87) Numéro de publication internationale:
**WO 2020/136363 (02.07.2020 Gazette 2020/27)**

(54) **LIGNE DE PREPARATION ET DE REMPLISSAGE DE BOUTEILLES**

VORRICHTUNG ZUM ZUBEREITEN UND ABFÜLLEN VON FLASCHEN

LINE FOR PREPARING AND FILLING BOTTLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2018 FR 1874336**

(43) Date de publication de la demande:
**03.11.2021 Bulletin 2021/44**

(73) Titulaire: **SYNERLINK**
**95650 Puiseux-Pontoise (FR)**

(72) Inventeurs:
• **MAUBOUSSIN, Loïc**
**95650 Puiseux-Pontoise (FR)**
• **VIEULOUP, Luc**
**28100 Dreux (FR)**

(74) Mandataire: **Derambure Conseil**
**c/o Plasseraud IP**
**66, rue de la Chaussée d'Antin**
**75440 Paris Cedex 09 (FR)**

(56) Documents cités:
EP-A1- 2 785 507      EP-B1- 2 785 507
US-A1- 2018 346 307

## Description

### Domaine technique

L'invention se rapporte à une ligne de préparation et de remplissage de bouteilles. En particulier, cela concerne des bouteilles faites en matériau plastique thermo-formable destinées à être remplies de liquide. Le liquide en question peut être un produit alimentaire, un produit pharmaceutique, sans exclure d'autres produits comme des produits de soins, des produits d'entretien, etc.

### Contexte et Art Antérieur

On s'intéresse au cas d'une ligne de fabrication qui comprend à la fois un équipement de formage des bouteilles en plastique thermo-formable et une ligne de remplissage des bouteilles agencée en aval du soufflage. Dans le jargon du métier on parle de « combiné de soufflage-remplissage ».

Les inventeurs ont cherché à améliorer la situation qui peut subvenir lorsque la ligne de remplissage est stoppée de manière non planifiée auquel cas les préformes de bouteilles qui se trouvent dans l'équipement de soufflage ne sont plus utilisables et doivent être caffutées.

Le document WO2013/080189 [SACMI] enseigne le principe d'utiliser un stock tampon entre l'équipement de formage des bouteilles et la ligne de remplissage afin de rendre plus indépendant le fonctionnement de chacune des machines et tolérer un arrêt momentané de l'une des machines sans forcément interrompre l'autre machine.

Le document EP2785507A1 divulgue une installation de production de bouteilles de produits liquides ou semi-liquides selon la préambule de la revendication 1.

Toutefois, il s'avère que les dispositifs de stock tampon connus sont volumineux et coûteux. La présente invention a pour objet de proposer une solution améliorée

### Résumé de l'invention

A cet effet, il est proposé, selon un **premier** aspect, une installation de production de bouteilles de produits liquides ou semi-liquide, les bouteilles étant formées en plastique thermo-formable, l'installation comprenant :

- un équipement de soufflage (1) de bouteilles à partir de préformes (9), avec tunnel de chauffage (8),
- une ligne de remplissage et de finition (3), comprenant un ou plusieurs postes d'emplissage des bouteilles, d'operculage et/ou bouchonnage, la ligne comprenant un convoyeur sans fin recevant des bouteilles (7) vides prêtes à être emplies et faisant transiter les bouteilles devant plusieurs postes d'emplissage, d'operculage et/ou bouchonnage, où il est prévu un convoyeur tampon (2) interposé entre l'équipement de soufflage et la ligne de remplissage et de finition, formé principalement comme un convoyeur sans fin, le convoyeur tampon comprenant un premier tronçon (T21) utilisé dans des conditions de flux normal, et un deuxième tronçon (T22) complémentaire du premier tronçon et servant d'espace de stockage tampon dans des conditions d'arrêt non planifié de la ligne de remplissage, avec un dispositif de manutention amont interposé entre l'équipement de soufflage et le convoyeur tampon, ayant un nombre **N4** d'emplacements pour bouteilles,

et en ce que la capacité de stockage bouteilles, pour le deuxième tronçon T22, notée **N22,** est dimensionnée suivant la condition **N22 > N8 + N1 - N4 - 1,** avec **N8** désignant le nombre de bouteilles et préformes pouvant être reçues dans le tunnel de chauffage et **N1** désignant le nombre de bouteilles et préformes pouvant être reçues dans l'équipement de soufflage.

Grâce à ces dispositions, si pour une raison quelconque, la ligne d'emplissage s'arrête, alors le convoyeur tampon continue avantageusement à accepter l'arrivée de bouteilles vides depuis l'équipement de soufflage et à les accumuler dans son deuxième tronçon. Ainsi, l'équipement de soufflage peut continuer à fonctionner normalement et les préformes qui se trouvaient dans le tunnel de chauffage peuvent être soufflées et stockées dans le convoyeur tampon en attendant que la ligne de remplissage puisse redémarrer. Ainsi on évite avantageusement de mettre des pièces au rebut.

Sous une autre perspective, quand la ligne d'emplissage fonctionne normalement, c'est-à-dire dans les conditions de flux normal, le convoyeur tampon fonctionne en convoyeur de transfert sur son premier tronçon T21 sans utiliser le deuxième tronçon qui reste alors à vide, avançant mais sans aucune bouteille ; alors qu'à l'inverse, si la ligne de remplissage s'arrête, le convoyeur tampon bascule en fonctionnement de stockage c'est-à-dire les bouteilles s'accumulent à l'intérieur du second tronçon en passant par le premier tronçon.

Dès que la ligne de remplissage re-fonctionne, alors les bouteilles dans le convoyeur tampon peuvent être vidées en mode FIFO (i.e. first in first out : premier entré premier sorti) pendant que l'équipement de soufflage est remis en fonctionnement.

En outre, le dispositif proposé présente une bonne compacité et ne nécessite pas de système de commande complexe.

Par « *convoyeur sans fin* », il faut comprendre ici un convoyeur conformé en boucle refermé sur lui-même.

Il faut noter que le nombre **N4** d'emplacements pour bouteilles disponibles dans le dispositif de manutention amont peut être nul, ou peut être égal à une valeur entière prédéterminée par exemple comprise entre 1 et 20.

Dans divers modes de réalisation de l'invention, on peut éventuellement avoir recours en outre à l'une et/ou à l'autre des dispositions suivantes, prises isolément ou en combinaison.

Selon une option, le convoyeur tampon fonctionne à cinématique indexée, c'est-à-dire avec travail à poste fixe après avancement. Autrement dit il fonctionne, pour une bouteille donnée, en mode pas-à-pas, avec une succession d'opération à poste fixe et d'opération de transfert. Cela facilite le chargement et déchargement du convoyeur tampon.

Selon une option, l'équipement de soufflage de bouteilles fonctionne à cinématique indexée, c'est-à-dire avec travail à poste fixe après avancement. Le processus de soufflage, pour une bouteille donnée, est réalisé en mode pas-à-pas, avec une succession d'opération à poste fixe et d'opération de transfert. Moyennant quoi, le moule de soufflage et ses accessoires restent relativement simples.

Selon une option, l'équipement de soufflage de bouteilles fonctionne avec une production par lot de taille N1, qu'il fonctionne en cinématique indexée ou en cinématique continue. Moyennant quoi, on peut obtenir des cadences élevées et une productivité conséquente.

Selon une option, la ligne de remplissage et de finition fonctionne en cinématique indexée avec remplissage à poste fixe, avec de préférence une production par lot de taille N3. Moyennant quoi, le processus de remplissage peut rester assez simple et bien maîtrisé sans effet parasite d'inertie ou de cinétique ; de même, une cinématique indexée facilite les possibilités de multi-remplissage, notamment les cas de plusieurs produits différents à dispenser dans chaque bouteille.

Selon une option, dans le contexte d'un fonctionnement par lots, on dimensionne la taille des lots et les temps de cycle de chacune des machines pour que N1/T1 soit voisin de N3/T3, de préférence N1/T1 sensiblement égal à N3/T3. T1 est le temps de cycle de la machine de soufflage alors que T3 est le temps de cycle de la machine de remplissage.

On note ici que le temps de cycle du convoyeur tampon peut être différent des deux autres temps de cycle T1 et T3.

Selon une option, le dispositif de manutention amont comprend un premier dispositif de transfert (4) pour charger les bouteilles arrivant de l'équipement de soufflage sur le convoyeur tampon (2). Ce premier dispositif de transfert permet de rendre substantiellement indépendants les moyens de manutention de l'équipement de soufflage des moyens de manutention formés par le convoyeur tampon.

Selon une option, il est prévu un second dispositif de transfert (5) pour décharger les bouteilles du convoyeur tampon et les charger sur la ligne de remplissage et de finition. Ce second dispositif de transfert permet de rendre substantiellement indépendants les moyens de manutention formés par le convoyeur tampon des moyens de manutention de la ligne de remplissage et de finition. En particulier, si pour une raison quelconque, la ligne d'emplissage s'arrête, alors le second dispositif de transfert devient inactif (stoppé) et le convoyeur tampon peut continuer avantageusement à accepter l'arrivée de bouteilles vides depuis l'équipement de soufflage (qui dépassent alors le second dispositif de transfert sans transfert) pour accumuler les bouteilles vides dans le deuxième tronçon T22.

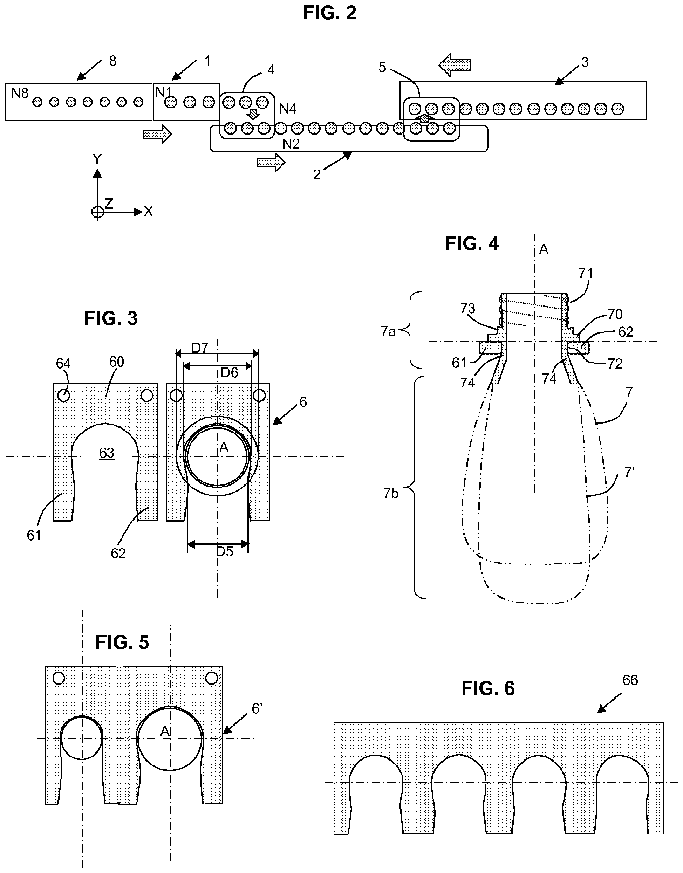

Selon une option, les bouteilles sont tenues par le col, de préférence exclusivement par le col, de préférence les bouteilles ne sont jamais posées sur leur fond. Avantageusement, le processus proposé fonctionne avec différents volumes de bouteilles (par ex 500 cl, 750 cl, 1 litre, 1,5 litres sans exclure d'autres contenances). La figure 4 illustre cet aspect.

Selon une option, chaque bouteille est maintenue par une fourchette (6). Ceci forme un dispositif simple et fiable pour maintenir une bouteille par le col (le goulot). La fourchette peut être configurée pour maintenir la bouteille à l'endroit (embouchure orientée vers le haut) et l'envers (embouchure orientée vers le bas). Il peut être prévu un moyen de retenue élastique (clip ou étranglement) dans la direction de chargement et de déchargement des bouteilles sur la fourchette. On remarque aussi que la fourchette peut maintenir la bouteille selon n'importe quelle orientation spatiale.

Selon une option, chaque bouteille est maintenue par une pince. Cette solution permet d'accepter différents diamètres de goulots sur la même installation avec les mêmes moyens de manutention/préhension. L'adaptation est facile, c'est la plus ou moins grande fermeture de la pince qui permet d'accepter indifféremment des goulots de différent diamètre.

Selon une option, il est prévu les fourchettes puissent être regroupées par sous-groupes sur une platine (66) de fourchettes. Cela permet un traitement par lot dans le convoyeur tampon, ceci peut être avantageux en cas de traitement par lot en amont et en aval du stock tampon.

Selon une option, le convoyeur tampon comporte une chaîne formant l'armature du convoyeur et une pluralité de fourchettes, les fourchettes étant fixées sur la chaîne, individuellement ou par groupe sur platine. Une telle structure de convoyeur avec chaîne est une solution simple et fiable, il s'agit d'une solution à coût maîtrisé.

Selon une option, la chaîne est montée et s'enroule sur deux ou quatre roues, lesdites roues ayant un axe de rotation horizontal ; une telle chaîne, disposée généralement dans un plan vertical, fournit une solution compacte avec une faible emprise au sol.

Selon une option, la ligne de remplissage et de finition est formée comme convoyeur déplaçant des platines équipées d'une ou plusieurs fourchettes.

Selon une option, il est prévu en outre une machine d'étiquetage et/ou de marquage en aval de la machine de remplissage ; les postes d'étiquetage et/ou de marquage permettent de parachever les produits/bouteilles avant packaging final et livraison.

Selon une option, tout ou partie de l'installation peut fonctionner en alternative en cinématique continue, par exemple le soufflage peut être en cinématique continue et le reste en cinématique indexée. Une installation fonctionnant totalement en cinématique continue est également considérée. On peut obtenir des capacités très importantes.

Selon une option, l'installation est configurée pour produire à une cadence comprise entre 5000 et 40 000 bouteilles par heure. Une telle grande capacité permet de livrer des marchés très importants en volume.

Selon une option, le temps de cycle de l'équipement de soufflage T1 peut être différent du temps de cycle de la ligne de remplissage T3 (avec un nombre différent de pièces par lot).

## Brève description des dessins

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :

   [Fig. 1] la figure 1 est une représentation schématisée d'une ligne de préparation et de remplissage de bouteilles, comme prévu par la présente invention,
   [Fig. 2] la figure 2 représente schématiquement en vue de dessus la ligne de préparation et de remplissage de bouteilles de la figure 1,
   [Fig. 3] la figure 3 représente plus en détail et en vue de dessus l'interface entre une fourchette de manutention et le col de bouteille,
   [Fig. 4] la figure 4 représente plus en détail et en vue de face l'interface entre la fourchette de manutention et le col de bouteille,
   [Fig. 5] la figure 5 représente une variante qui permet de traiter deux tailles de goulot de bouteille,
   [Fig. 6] la figure 6 représente une variante utilisant une platine multi-fourchette, capable de maintenir plusieurs bouteilles en même temps ici quatre dans l'exemple représenté,
   [Fig. 7] la figure 7 illustre le premier et/ou le second dispositif de transfert, utilisé pour charger ou décharger les bouteilles,
   [Fig. 8] la figure 8 illustre un exemple du convoyeur tampon dans son ensemble,
   [Fig. 9A] les figures 9A, 9B et 9C représentent schématiquement le fonctionnement du second tronçon du convoyeur tampon,
   [Fig. 11] la figure 11 représente une variante de convoyeur sans fin,
   [Fig. 12] la figure 12 représente une variante pour maintenir les bouteilles, à savoir avec des pinces au lieu de fourchettes,

## Description des modes de réalisation

Sur les différentes figures, les mêmes références désignent des éléments identiques ou similaires. Pour des raisons de clarté de l'exposé, certains éléments ne sont pas nécessairement représentés à l'échelle.

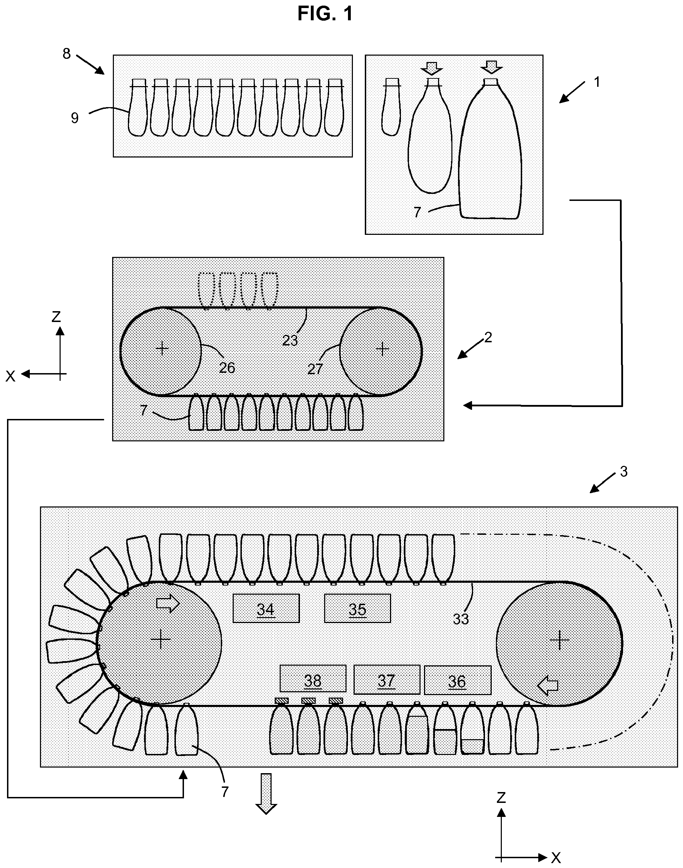

La figure 1 représente schématiquement une installation de production de bouteilles de produits liquides ou semi-liquide.

Les bouteilles en question sont formées en plastique thermo-formable.

Le terme « bouteille » ici doit être interprété largement, et désigne tout contenant de liquide de formes variées, bouteilles longues, bouteilles courtes, gourdes, pots, mini-cubitainer, ces contenants étant formés en particulier en plastique thermo-formable.

Le matériau est du PET (poly-ethylene terephthalate), mais tout autre matière plastique thermo-formable équivalente pourrait aussi être utilisée.

Les bouteilles **7** sont obtenues à partir de préformes **9**. La bouteille finie comprend une portion de goulot **7a** et un corps **7b**.

A partir des préformes, on utilise un équipement de soufflage **1** connu ne soi, donc non décrit ici en détails. On peut aussi utiliser le terme machine de soufflage pour l'équipement de soufflage. En amont de l'équipement de soufflage 1, il est prévu un tunnel de chauffage 8, afin que la matière plastique des préformes soit suffisamment malléable et permette ainsi un soufflage facile des préformes pour en faire des bouteilles 7. On remarque que la portion de goulot 7a de chaque bouteille est déjà formée telle quelle dans la préforme, autrement dit c'est le corps 7b de la bouteille que l'on va déformer par soufflage et non pas le goulot qui va rester sans être modifié par le procédé de soufflage.

**N8** désigne le nombre de bouteilles et préformes pouvant être reçues dans le tunnel de chauffage 8. **N1** désigne le nombre de bouteilles et préformes pouvant être reçues dans l'équipement de soufflage 1. **N8** et **N1** représentent un nombre d'emplacements de bouteilles ou préformes, autrement dit la capacité de contenance respective du tunnel de chauffage et de l'équipement de soufflage.

En aval du processus de soufflage, est installé un convoyeur tampon 2 dont le fonctionnement et les détails seront exposés plus loin.

En aval du convoyeur tampon 2, est installé une ligne de remplissage et de finition repérée **3**.

Dans l'agencement général, le convoyeur tampon 2 est interposé entre l'équipement de soufflage 1 et la ligne de remplissage et de finition **3**.

Le convoyeur tampon 2 est formé principalement comme un convoyeur sans fin apte à recevoir des bouteilles.

Le convoyeur tampon comprenant un premier tronçon **T21** utilisé dans des conditions de flux normal, et un deuxième tronçon **T22** et servant d'espace de stockage tampon dans des conditions d'arrêt non planifié de la ligne de remplissage.

Dans l'exemple illustré, avantageusement, le deuxième tronçon T22 est complémentaire du premier tronçon T21, c'est-à-dire que, mis bout-à-bout, ils forment l'intégralité du convoyeur sans fin.

Le convoyeur tampon comporte une chaîne **23** formant l'armature mobile du convoyeur sans fin. On note qu'il n'est pas exclu d'utiliser une autre solution pour former l'armature du convoyeur comme par exemple un ruban composite armé.

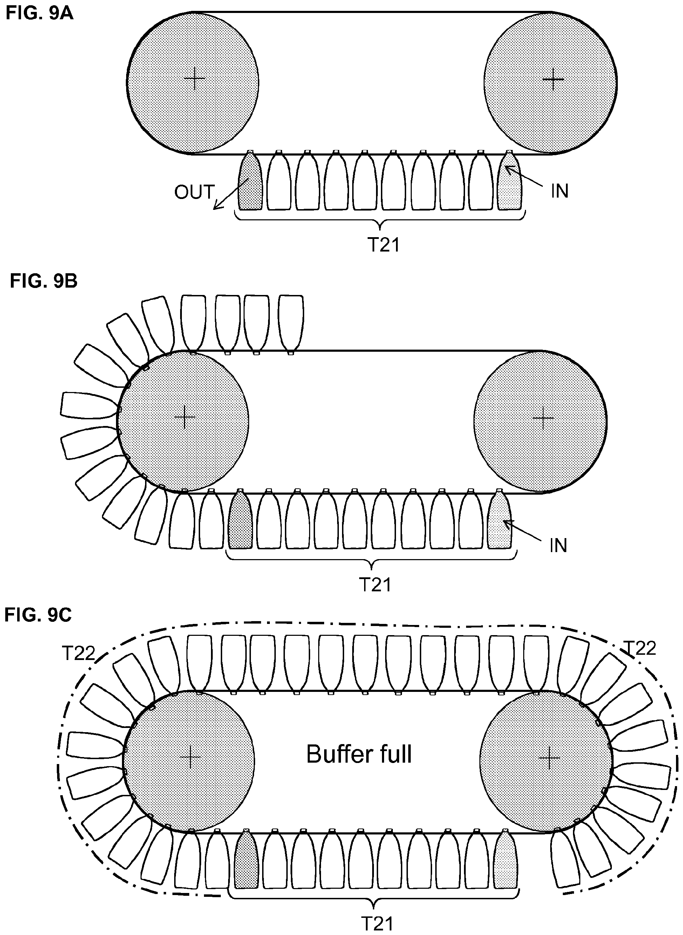

Selon un premier exemple (illustré en figures 1 et 9A-9C), la chaîne **23** est montée et s'enroule sur deux roues **26,27,** lesdites roues ayant chacune un axe de rotation horizontal **Y6,Y7.** Une des roues est entrainée par un moteur électrique.

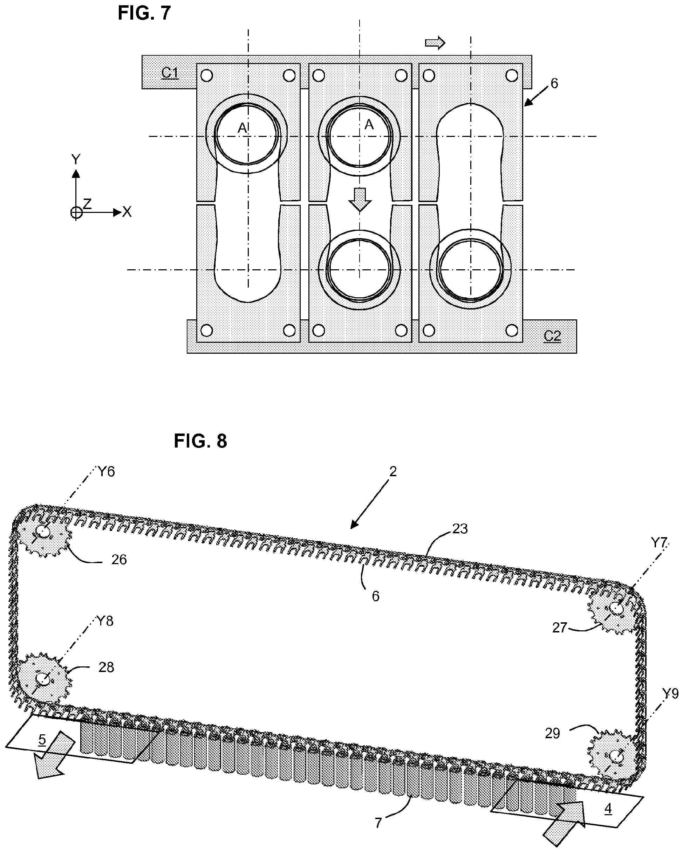

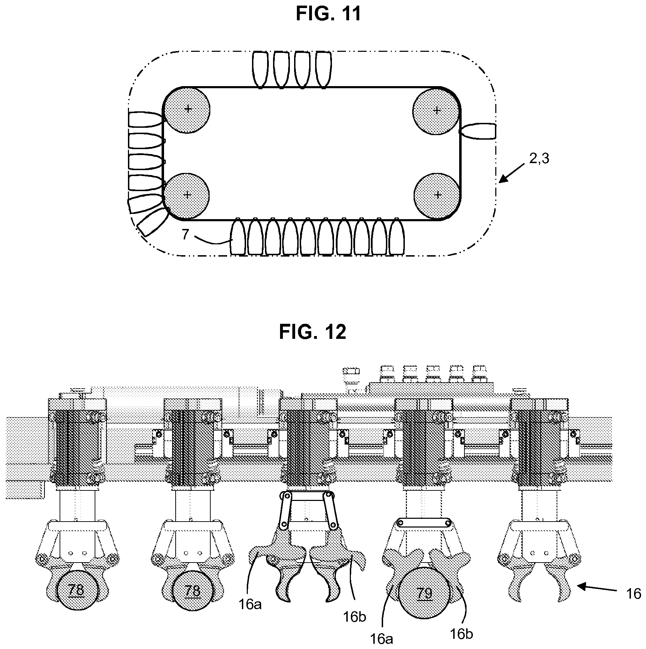

Selon un second exemple (illustré aux figures 8 et 11), la chaîne **23** est montée et s'enroule sur quatre roues **26-29,** lesdites roues ayant chacune un axe de rotation horizontal (**Y6**-**Y9**). Une des roues est entrainée par un moteur électrique et piloté en séquence ad-hoc par un automate programmable ou plus généralement une unité de commande.

Le nombre de roues n'est pas nécessairement limité à 3 ou 4, et il peut être prévu le montage d'une roue sur un axe doté d'une précontrainte destiné à maintenir une contrainte de traction prédéterminée tout le long de la chaîne.

En référence à la figure 1, la ligne de remplissage et de finition 3 comprend un ou plusieurs postes de remplissage **36** (optionnellement chacun pour une fraction du volume rempli), un poste d'operculage **37** et un poste de bouchonnage **38.**

Optionnellement, en vis-à-vis du brin supérieur du convoyeur sans fin de la ligne de remplissage, il peut être prévu un poste de vérification et ou de soufflage **34,** ainsi qu'un poste de désinfection **35.**

La ligne de remplissage et de finition comporte une chaîne **33** formant l'armature mobile du convoyeur sans fin. La ligne de remplissage et de finition 3 est disposée le long du convoyeur sans fin, avec une disposition générale dans un plan vertical XZ.

En référence à la figure 2, à la sortie de l'équipement de soufflage, il est prévu un dispositif de manutention amont. Le nombre N4, défini comme le nombre d'emplacements pour bouteilles disponibles dans ledit dispositif de manutention amont, peut être nul, ou peut être égal à une valeur entière prédéterminée par exemple comprise entre 1 et 20.

Le dispositif de manutention amont comprend un premier dispositif de transfert 4 pour charger les bouteilles arrivant de l'équipement de soufflage sur le convoyeur tampon 2. Plusieurs solutions sont possibles pour un tel dispositif de transfert, une solution particulière sera illustrée dans le commentaire de la figure 7.

De même, à la sortie du convoyeur tampon, il est prévu un second dispositif de transfert 5 pour décharger les bouteilles du convoyeur tampon et les charger sur la ligne de remplissage et de finition 3. Là aussi, plusieurs solutions sont possibles pour un tel dispositif de transfert, une solution particulière sera illustrée dans le commentaire de la figure 7.

La figure 3 illustre une solution de fourchettes individuelles comme moyen de maintenir les bouteilles à l'intérieur du convoyeur tampon. On remarque que cette solution peut être appliquée de manière similaire ou identique dans le convoyeur de la ligne de remplissage et de finition.

Si on considère plus en détail la forme du goulot **7a** de bouteille, la portion de goulot comprend, vu de l'extérieur et depuis l'extrémité libre supérieure :

- un pas de vis extérieur **71** pour recevoir un bouchon,
- une portée annulaire **73** pour recevoir un anneau de sécurité ou un anneau de témoin de non-utilisation,
- une collerette **70,** formée en anneau plat, de plus grand diamètre **D7,**
- un col **72** de diamètre **D6,** D6 étant substantiellement plus petit que D7,
- un élargissement noté **74,** qui forme le début du corps 7b de la bouteille.

On note que le corps de la bouteille peut présenter une symétrie générale de révolution autour de l'axe **A.** Mais la bouteille peut aussi présenter une section transversale du corps généralement carrée avec des coins arrondis, ceci afin d'optimiser l'espace occupé par les packs de bouteilles.

Le corps de la bouteille peut présenter des nervures de renforts anti-écrasement.

Pour s'adapter à une telle géométrie de goulot de bouteille, l'installation prévoit avantageusement d'utiliser des fourchettes, repérées **6.**

Comme illustré à la figure 3, chaque fourchette comprend une base **60** et deux doigts **61, 62** se projetant à partir de la base, les deux doigts définissant un espace /logement de réception **63** pour accueillir un goulot de bouteille.

Selon une réalisation, la fourchette est obtenue à partir d'un flan plat par découpe. On pourra typiquement utiliser de l'acier inoxydable ou tout matériau compatible avec les processus de préparation alimentaire sécurisés du point de vue hygiène. L'épaisseur de matière peut être comprise entre 2 et 5mm, celle-ci peut être adaptée pour optimiser le maintien par le col entre la collerette **70** et l'élargissement noté **74.**

L'espace de réception **63** se présente en vue de dessus comme une forme en creux avec resserrement anti-retrait, c'est-à-dire dans l'exemple illustré un étranglement de largeur **D5, D5** étant légèrement inférieur au diamètre **D6.**

Chaque fourchette est fixée sur la chaîne du convoyeur sans fin grâce à des trous 64 et des vissages ou par tout autre moyen.

On a illustré à la figure 5 une fourchette double c'est-à-dire une fourchette à deux positions chacune ayant une dimension différente, de manière à pouvoir accueillir soit des grands goulots soit des petits goulots sur le même équipement de manutention.

La figure 4 illustre le fait que la forme du corps de la bouteille est indifférente vis-à-vis des moyens de préhension et du goulot ; ainsi on peut avoir des corps de bouteilles de toutes formes et de toute contenance (par exemple sur l'illustration une bouteille courte **7** et une bouteille longue **7'**).

La bouteille peut être maintenue à l'endroit, c'est-à-dire avec l'ouverture orientée vers le haut mais aussi « tête en bas » c'est-à-dire avec ouverture orientée vers le bas. D'une façon générale, la bouteille peut être maintenue dans n'importe quelle orientation spatiale. On note que sur les parties d'extrémité du convoyeur tampon 2, les bouteilles sont dans une position avec un axe A horizontal. Il faut noter toutefois qu'il y peut y avoir un peu de jeu entre l'axe théorique correspondant à celui du logement de la fourchette et l'axe réel de la bouteille qui est maintenue dans ledit logement.

On a illustré à la figure 6 une platine **66** formant un groupe de fourchettes, assemblée comme autant de fourchettes individuelles (ici 4) ou formées comme une platine monolithique ayant autant de logements de réception (ici 4).

Avantageusement, pour le deuxième tronçon **T22** du convoyeur tampon 2, sa capacité de stockage de bouteilles est noté **N22,**

**N22** est dimensionné pour satisfaire la condition suivante :

$$N22 > N8 + N1 - N4 - 1$$

Dit autrement, la capacité de stockage de bouteilles du deuxième tronçon est au moins égale au nombre de bouteilles et préformes pouvant être reçues dans la machine de soufflage **1** y compris dans le tunnel de chauffage 8, déduction faite du nombre de bouteilles **N4** pouvant être reçues dans le dispositif de manutention amont.

Par exemple, sur l'exemple des figures 9A-9C, la capacité de stockage est de 30 places. Par exemple, sur l'exemple de la figure 8, la capacité de stockage est supérieure à 60 places. Bien entendu des capacités supérieures ou inférieures peuvent être visées.

Selon la présente invention, on évite de mettre au rebut les pièces qui se trouvaient dans le tunnel de chauffage et dans l'équipement de soufflage. Ainsi, la capacité de stockage de bouteilles **N22** pour le deuxième tronçon **T22** est au moins égale au nombre de bouteilles et préformes pouvant être reçues dans la machine de soufflage **1** et dans le tunnel de chauffage **8** déduction faite du nombre de bouteilles **N4** pouvant être reçues dans le dispositif de manutention amont.

S'agissant maintenant des dispositifs de transfert **4** et **5,** en référence à la figure 7, il peut être prévu pour passer d'un convoyeur sans fin à un autre d'avoir une station avec des fourchettes qui se retrouvent en vis-à-vis avec les ouvertures situées en face l'une de l'autre. Sur l'exemple illustre, les bouteilles sont transférées depuis le convoyeur **C1** vers le convoyeur **C2.**

Le transfert peut être fait individuellement bouteilles par bouteilles, ou bien par lot. Ici le transfert est une simple translation qui peut être provoquée par un poussage de la bouteille depuis le convoyeur C1 vers le convoyeur C2. De préférence on exerce une action pour transférer la bouteille sur la portion de goulot ce qui permet d'avoir une solution indépendante de la forme et/ou de la contenance du corps des bouteilles.

Dans d'autre(s) mode(s) de réalisation, on peut utiliser des moyens plus sophistiqués comme un bras manipulateur ou un robot multi axes.

Dans une configuration de ligne telle que schématisé à la figure 2, des dispositifs de transfert à translation simple comme illustrés ci-dessus peuvent être utilisés à la fois pour le chargement du convoyeur tampon et pour le déchargement du convoyeur tampon.

Le second dispositif de transfert, en charge de décharger les bouteilles du convoyeur tampon afin de les charger sur le convoyeur de ligne de finition peut être commandé par une unité de commande, configurée pour activer ou non le dispositif de transfert 5 selon les conditions d'exploitation de la ligne.

En particulier, si pour une raison quelconque, la ligne d'emplissage **3** s'arrête, alors l'unité de commande va en conséquence stopper de fonctionnement du second dispositif de transfert **5** de manière à ce que le convoyeur tampon continue à accepter l'arrivée de bouteilles vides depuis l'équipement de soufflage pour les accumuler dans le deuxième tronçon **T22.** Quand le second dispositif de transfert est inactif (stoppé) les bouteilles vides passent alors devant le second dispositif de transfert sans aucun transfert.

Dès que la ligne de remplissage re-fonctionne, l'unité de commande réactive le second dispositif de transfert, alors les bouteilles dans le convoyeur tampon peuvent être vidées en mode FIFO pendant que l'équipement de soufflage est remis en service.

La figure 12 illustre une variante pour la solution du maintien des bouteilles dans le convoyeur sans fin. On utilise des pinces à mâchoires mobile. Une pince **16** comprend deux mâchoires **16a, 16b.** Il est prévu un rappel à ressort vers la position fermée. A l'inverse, il est prévu des chemins de came et un mécanisme pour ouvrir la pince dans certaines conditions d'avancement de la pince par rapport au poste de travail. La pince en question peut être ainsi utilisée indifféremment pour saisir des petits goulots **78** ou des plus gros goulots **79.**

Le convoyeur tampon peut être agencé en configuration verticale ou en configuration horizontale, comme déjà mentionné dans les cas précédents.

**Revendications**

**1.** Installation de production de bouteilles de produits liquides ou semi-liquide, les bouteilles étant formées en plastique thermo-formable, l'installation comprenant :

- un équipement de soufflage (1) de bouteilles à partir de préformes (9), avec tunnel de chauffage (8),
- une ligne de remplissage et de finition (3), comprenant un ou plusieurs postes d'emplissage des bouteilles, d'operculage et/ou bouchonnage, la ligne comprenant un convoyeur sans fin apte à recevoir des bouteilles (7) vides prêtes à être emplies et faisant transiter les bouteilles devant plusieurs postes d'emplissage, d'operculage et/ou bouchonnage,

où il est prévu un convoyeur tampon (2) interposé entre l'équipement de soufflage (1) et la ligne de remplissage et de finition (3), formé principalement comme un convoyeur sans fin apte à recevoir des bouteilles, **caractérisé en ce que**

le convoyeur tampon comprend un premier tronçon (T21) utilisé dans des conditions de flux normal, et un deuxième tronçon (T22) complémentaire du premier tronçon et servant d'espace de stockage tampon dans des conditions d'arrêt non planifié de la ligne de remplissage, avec un dispositif de manutention amont interposé entre l'équipement de soufflage (1) et le convoyeur tampon (2), ayant un nombre N4 d'emplacements pour bouteilles, et **en ce que** la capacité de stockage de bouteilles (7) pour le deuxième tronçon (T22), notée N22, est dimensionnée suivant la condition $N22 > N8 + N1 - N4 - 1$, avec N8 désignant le nombre de bouteilles et préformes pouvant être reçues dans le tunnel de chauffage et N1 désignant le nombre de bouteilles et préformes pouvant être reçues dans l'équipement de soufflage (1) :

2. Installation selon la revendication 1, dans laquelle le convoyeur tampon (2) fonctionne à cinématique indexée, c'est-à-dire avec travail à poste fixe après avancement.

3. Installation selon l'une des revendications 1 ou 2, dans laquelle l'équipement de soufflage (1) de bouteilles fonctionne à cinématique indexée, c'est-à-dire avec travail à poste fixe après avancement, avec de préférence une production par lot de taille N1.

4. Installation selon l'une des revendications 1 à 3, dans laquelle la ligne de remplissage et de finition (3) fonctionne en cinématique indexée avec remplissage à poste fixe, avec de préférence une production par lot de taille N3.

5. Installation selon l'une des revendications 1 à 4, dans laquelle le dispositif de manutention amont comprend un premier dispositif de transfert (4) pour charger les bouteilles arrivant de l'équipement de soufflage sur le convoyeur tampon (2).

6. Installation selon l'une des revendications 1 à 5, dans laquelle il est prévu un second dispositif de transfert (5) pour décharger les bouteilles du convoyeur tampon et les charger sur la ligne de remplissage et de finition.

7. Installation selon l'une des revendications 1 à 6, dans laquelle les bouteilles sont tenues par le col, de préférence exclusivement par le col, de préférence les bouteilles ne sont jamais posées sur leur fond.

8. Installation selon l'une des revendications 1 à 7, dans laquelle chaque bouteille (7) est maintenue par une fourchette (6).

9. Installation selon l'une des revendications 1 à 7, dans laquelle chaque bouteille est maintenue par une pince (16).

10. Installation selon l'une des revendications 1 à 9, dans laquelle le convoyeur tampon (2) comporte une chaîne formant l'armature du convoyeur et une pluralité de fourchettes, les fourchettes étant fixées sur la chaîne, individuellement ou par groupe sur platine.

11. Installation selon la revendication 10, dans laquelle la chaîne est montée et s'enroule sur deux ou quatre roues, lesdites roues ayant chacune un axe de rotation horizontal.

**Patentansprüche**

1. Anlage zur Herstellung von Flaschen für flüssige oder halb-flüssige Produkte, wobei die Flaschen aus thermisch verformbarem Kunststoff geformt sind, wobei die Anlage umfasst:

- einer Blasvorrichtung (1) zum Blasen von Flaschen aus Vorformlingen (9) mit einem Heiztunnel (8),
- eine Füll- und Endbearbeitungslinie (3), umfassend eine oder mehrere Stationen zum Befüllen der Flaschen, zum Verschließen und/oder Verkorken,

wobei die Linie einen Endlosförderer umfasst, der leere Flaschen (7) aufnehmen kann, die zum Befüllen bereit sind, und die Flaschen an mehreren Stationen zum Befüllen, Verschließen und/oder Verkorken vorbeiführt,

wobei ein Pufferförderer (2) zwischen der Blasvorrichtung (1) und der Füll- und Endbearbeitungslinie (3) vorgesehen ist, der hauptsächlich als Endlosförderer zur Aufnahme von Flaschen ausgebildet ist, **dadurch gekennzeichnet, dass** der Pufferförderer ein erstes Teilstück (T21) umfasst, welches unter normalen Fließbedingungen verwendet wird, und ein zweites Teilstück (T22) umfasst, welches das erste Teilstück ergänzt und als Pufferlagerraum unter ungeplanten Stillstandsbedingungen der Fülllinie dient, mit einer stromaufwärts angeordneten Handhabungsvorrichtung, die zwischen der Blasvorrichtung (1) und dem Pufferförderer (2) angeordnet ist und eine Anzahl N4 von Flaschenplätzen aufweist, und dass die Flaschenspeicherkapazität (7) für den zweiten Abschnitt (T22), die mit N22 bezeichnet ist, gemäß der Bedingung N22 > N8 + N1 -N4 -1 dimensioniert ist, wobei N8 die Anzahl der Flaschen und Vorformlinge bezeichnet, die im Heiztunnel aufgenommen werden können, und N1 die Anzahl der Flaschen und Vorformlinge bezeichnet, die in der Blasvorrichtung (1) aufgenommen werden können.

2. Anlage nach Anspruch 1, wobei der Pufferförderer (2) mit indexierter Kinematik arbeitet, d. h. mit stationärer Arbeit nach dem Vorschub.

3. Anlage nach einem der Ansprüche 1 oder 2, wobei die Flaschenblasvorrichtung (1) mit indexierter Kinematik, d. h. mit stationärer Arbeit nach dem Vorschub, arbeitet, bevorzugt mit einer Chargenproduktion der Größe N1.

4. Anlage nach einem der Ansprüche 1 bis 3, wobei die Füll- und Endbearbeitungslinie (3) mit indexierter Kinematik mit stationärer Befüllung arbeitet, bevorzugt mit einer Chargenproduktion der Größe N3.

5. Anlage nach einem der Ansprüche 1 bis 4, wobei die stromaufwärts angeordnete Fördervorrichtung eine erste Transfervorrichtung (4) zum Laden der von der Blasvorrichtung ankommenden Flaschen auf den Pufferförderer (2) umfasst.

6. Anlage nach einem der Ansprüche 1 bis 5, wobei eine zweite Transfervorrichtung (5) vorgesehen ist, um die Flaschen vom Pufferförderer zu entladen und sie auf die Füll- und Endbearbeitungslinie zu laden.

7. Anlage nach einem der Ansprüche 1 bis 6, wobei die Flaschen am Hals gehalten werden, bevorzugt ausschließlich am Hals gehalten werden, und bevorzugt die Flaschen nie auf ihrem Boden abgestellt sind.

8. Anlage nach einem der Ansprüche 1 bis 7, wobei jede Flasche (7) von einer Gabel (6) gehalten ist.

9. Anlage nach einem der Ansprüche 1 bis 7, wobei jede Flasche von einer Klammer (16) gehalten ist.

10. Anlage nach einem der Ansprüche 1 bis 9, wobei der Pufferförderer (2) eine Kette umfasst, die das Gerüst des Förderers bildet, und eine Vielzahl von Gabeln umfasst, wobei die Gabeln auf der Kette einzeln oder gruppenweise auf einer Platine befestigt sind.

11. Anlage nach Anspruch 10, wobei die Kette auf zwei oder vier Rädern montiert ist und abrollt, wobei die Räder jeweils eine horizontale Drehachse aufweisen.

## Claims

1. Plant for producing bottles for liquid or semi-liquid products, the bottles being formed from thermoformable plastic, the plant comprising:

    - equipment (1) for blow moulding bottles from preforms (9), with heating tunnel (8),
    - a filling and finishing line (3), comprising one or more stations for filling bottles, capping and/or stoppering, the line comprising an endless conveyor able to receive empty bottles (7) ready to be filled and causing the bottles to transit in front of a plurality of filling, capping and/or stoppering stations,
    where a buffer conveyor (2) is provided interposed between the blow moulding equipment (1) and the filling and finishing line (3), formed mainly as an endless conveyor able to receive bottles, **characterised in that** the buffer conveyor comprises a first portion (T21) used under normal flow conditions, and a second portion (T22) complementary to the first portion and serving as a buffer storage space under unplanned stoppage conditions of the filling line, with an upstream handling device interposed between the blow moulding equipment (1) and the buffer conveyor (2), having a number N4 of locations for bottles, and **in that** the bottle storage capacity (7) for the second portion (T22), denoted N22, is sized in accordance with the condition N22 > N8 + N1 - N4 - 1, with N8 designating the number of bottles and preforms that can be received in the heating tunnel and N1 designating the number of bottles and preforms that can be received in the blow moulding equipment (1).

2. Plant according to claim 1, wherein the buffer conveyor (2) operates with indexed kinematics, i.e. with work at a fixed station after forward travel.

3. Plant according to one of claims 1 or 2, wherein the bottle blow moulding equipment (1) operates with indexed kinematics, i.e. with work at a fixed station after forward travel, with preferably production by batch of size N1.

4. Plant according to one of claims 1 to 3, wherein the filling and finishing line (3) operates in indexed kinematics with filling at a fixed station, with preferably production by batch of size N3.

5. Plant according to one of claims 1 to 4, wherein the upstream handling device comprises a first transfer device (4) for loading the bottles arriving from the blow moulding equipment on the buffer conveyor (2).

6. Plant according to one of claims 1 to 5, wherein a second transfer device (5) is provided for discharging the bottles from the buffer conveyor and loading them onto the filling and finishing line.

7. Plant according to one of claims 1 to 6, wherein the bottles are held by the neck, preferably solely by the neck, preferably the bottles are never placed on their base.

8. Plant according to one of claims 1 to 7, wherein each bottle (7) is held by a fork (6).

9. Plant according to one of claims 1 to 7, wherein each bottle is held by a clamp (16).

10. Plant according to one of claims 1 to 9, wherein the buffer conveyor (2) includes a chain forming the framework of the conveyor and a plurality of forks, the forks being secured to the chain, individually or in groups on a plate.

11. Plant according to claim 10, wherein the chain is mounted and is wound over two or four wheels, said wheels each having a horizontal rotation axis.

# FIG. 1

**FIG. 2**

**FIG. 3**

**FIG. 4**

**FIG. 5**

**FIG. 6**

**FIG. 7**

**FIG. 9A**

OUT

IN

T21

**FIG. 9B**

IN

T21

**FIG. 9C**

T22

T22

Buffer full

T21

## FIG. 11

## FIG. 12

**EP 3 902 662 B1**

## RÉFÉRENCES CITÉES DANS LA DESCRIPTION

### Documents brevets cités dans la description

- WO 2013080189 A
- EP 2785507 A1